# EUROPÄISCHE PATENTSCHRIFT

(11) **EP 3 212 756 B1**
(45) Veröffentlichungstag und Bekanntmachung des Hinweises auf die Patenterteilung: **19.04.2023**
(21) Anmeldenummer: 15787550.1
(22) Anmeldetag: 27.10.2015
(51) Int. Cl.: B01D 3/00, C12H 6/02, B01D 3/02

(54) **DESTILLATIONSANLAGE**
DISTILLATION SYSTEM
INSTALLATION DE DISTILLATION

(30) Priorität: 29.10.2014 DE 102014222071
(43) Veröffentlichungstag der Anmeldung: 06.09.2017
(73) Patentinhaber: GEA Wiegand GmbH, 76275 Ettlingen (DE)
(72) Erfinder: MÖSSLEIN, Monika, 76275 Ettlingen (DE); SCHEIBY, David, Solihull, West Mids B91 3RN (GB)
(74) Vertreter: Herzog, Markus
(86) Internationale Anmeldenummer: PCT/EP2015/074824
(87) Internationale Veröffentlichungsnummer: WO 2016/066622

(56) Entgegenhaltungen:
- EP-A1- 0 049 584
- WO-A1-81/02088
- WO-A1-2008/046633
- WO-A1-2008/046634
- DE-A1- 19 650 163
- DE-A1-102007 020 786
- DE-A1-102011 082 513
- FR-A1- 2 570 285
- Jurg Schiffmann ET AL: "High-Speed Low Power Radial Turbocompressor for Oil-Free Heat Pumps HIGH-SPEED LOW POWER RADIAL TURBOCOMPRESSOR FOR OIL- FREE HEATPUMPS", International Compressor Engineering Conference. Paper 1828. International Compressor Engineering Conference at Purdue, 17. Juli 2006 (2006-07-17), XP055267516, Gefunden im Internet: URL:http://docs.lib.purdue.edu/cgi/viewcon tent.cgi?article=2827&context=icec [gefunden am 2006-07-17]
- Jack Kane; Epi Inc.: "Turbochargers: How They Work, and Current Turbo Technology, by EPI Inc.", , 1. November 2008 (2008-11-01), XP055267514, Gefunden im Internet: URL:http://www.epi-eng.com/piston_engine_t echnology/turbocharger_technology.htm [gefunden am 2016-04-21]

## Beschreibung

Die Erfindung betrifft eine Blasendestillationsanlage, vorzugsweise für Whiskey.

Wenngleich Trinkalkohol auch in kontinuierlich arbeitenden Destillationsanlagen in Fraktionen vereinzelt werden kann, wird für manche Trinkalkoholsorten, insbesondere jedoch für Whiskey, die portionsweise Destillation in Blasen-Destillationanlagen in großem Umfang eingesetzt. In den zumeist aus Kupfer bestehenden Blasen ("pot stills") wird die durch Zusatz von Hefe zu einer alkoholhaltigen Flüssigkeit ("wash") vergorene Würze ("wort") in einem behälterartigen Unterteil der Blase erwärmt, womit Alkohol aus der vergorenen Flüssigkeit verdampft. Der Unterteil der Blase ist durch einen kegelförmigen Oberteil abgedeckt und mit einem Kondensator verbunden, welcher den aus dem Unterteil aufsteigenden Alkoholdampf kondensiert.

Üblicherweise wird Whiskey in wenigstens zwei nacheinander durchlaufenen Blasen destilliert. Die in einer ersten Blase ("wash still") zu destillierende, vergorene Flüssigkeit ("wash") enthält neben dem Rohalkohol noch Hefe sowie einige unvergärbare Stoffe und Nebenprodukte der Gärung. Beim Kochen verändert sich die vergorene Flüssigkeit in einer Weise, die für den Geschmack und Charakter des Whiskeys von entscheidender Bedeutung ist. Das Besondere an der Blasen-Destillation ist, dass die Kondensation in einer solchen Destillationsanlage nicht ausschließlich im Kondensator stattfindet, sondern auch an den Wänden der Blase, insbesondere ihrem Oberteil und dem normalerweise sich daran anschließenden Verbindungsarm ("lyne arm") zum Kondensator. Die (Partial)-Kondensation des alkoholhaltigen Dampfs und die damit verbundene Trennwirkung der Blase - unterstützt von Adsorptions- und Desorptionsvorgängen am Kupfer aus dem zumeist die gesamte Anlage besteht - haben wesentlichen Einfluss auf die Qualität des Whiskeys.

Das aus dem Kondensator des ersten Destillationsgangs sich ergebende Kondensat ("low wines") wird für einen zweiten Destillationsgang einer zweiten Destillationsblase ("spirit still") zugeführt, in der beim Destillieren das Kondensat in drei Fraktionen - den Vorlauf, den Trinkalkohol und den Nachlauf - getrennt werden. Während der Trinkalkohol bei Nutzung von lediglich zwei Destillationsgängen das gegebenenfalls noch zu verschneidende Endprodukt bildet, werden der Vorlauf und der Nachlauf mit der nächsten Füllung der zweiten Destillationsblase erneut in den Destillationsprozess eingeführt. Es versteht sich, dass die Destillation auch in mehr als zwei Destillationsgängen, insbesondere drei Destillationsgängen erfolgen kann. Bei diesen wiederholten Destillationsgängen ist der Trinkalkohol Feststoff frei.

Der Energiebedarf der Destillationsblase des ersten Destillationsgangs ("wash still") wird herkömmlich durch Wasser-Frischdampf gedeckt und ist vergleichsweise hoch.

Die Energierückgewinnung ist nicht ohne Weiteres möglich, da die Verdampfungstemperatur in der Destillationsblase mit zunehmender Alkoholabreicherung der in der Blase sich befindenden alkoholhaltigen Flüssigkeit ansteigt, ebenso wie auch die Kondensationstemperatur der alkoholhaltigen Dämpfe ansteigt. Eine Regelung ist nicht erwünscht, da jede Änderung der Verfahrensparameter einen Einfluss auf die Qualität des entstehenden Whiskeys haben kann.

Aus FR 2 970 479 ist eine mehrstufige Branntwein-Blasendestillationsanlage bekannt, bei welcher eine erste Destillationsblase unter Druck und ein zweite Destillationsblase unter Vakuum betrieben wird. Alkoholhaltige Dämpfe der ersten Destillationsblase werden über einen ersten Wärmetauscher einer frischdampfgetriebenen Dampfstrahlpumpe zugeführt, die einen zweiten, der Heizung der ersten Blasendestillationsstufe dienenden Wärmetauscher speist.

Ferner sei auf die WO 2008/046633 A1 verwiesen, welche eine Blasendestillationsanlage mit einer Destillationsblase, einer Heizeinrichtung und einem Kondensator lehrt. Der Vollständigkeit halber sollen ferner die WO 2008/046634 A1, die EP 0 049 584 A1, die DE 10 2011 082 513 A1, die DE 10 2007 020 786 A1, die FR 2 570 285 A1, die DE 196 50 163 A1 und die WO 81/02088 A1 erwähnt sein.

Es ist Aufgabe der Erfindung, eine insbesondere für die Destillation von Whiskey geeignete Blasendestillationsanlage zu schaffen, die es erlaubt, die für die Destillation erforderliche Fremdenergie, insbesondere den Frischdampfbedarf zu verringern, ohne auf Qualitätsparameter des Trinkalkohols, insbesondere des Whiskeys sich auswirkende Verfahrensparameter der Destillation unerwünschten Einfluss nehmen zu müssen.

Die Erfindung geht aus von einer Blasendestillationsanlage, insbesondere für Whiskey, welche umfasst:
- eine Destillationsblase mit einem für die Erwärmung einer alkoholhaltigen Flüssigkeit eingerichteten Unterteil und einem alkoholhaltige Dämpfe abführenden Oberteil,
- eine die alkoholhaltige Flüssigkeit in dem Unterteil erwärmende Heizeinrichtung mit einem im Wärmetauschkontakt mit der alkoholhaltigen Flüssigkeit stehenden, mit Wasserdampf beheizten Wärmetauscher, und
- einen aus dem Oberteil zugeführten, alkoholhaltigen Dampf kondensierenden Kondensator mit einem Kühlwasser im Kreislauf über den Kondensator führenden Kühlwasserkreislauf.

Die vorstehend angegebene Aufgabe wird erfindungsgemäß dadurch gelöst, dass der Kühlwasserkreislauf einen Wasserdampf aus dem Kühlwasserkreislauf abtrennenden Separator umfasst, und dass ein mechanischer Verdichter den von dem Separator abgetrennten Wasserdampf vorverdichtet und einen Sauganschluss einer von Wasserdampf aus einer Wasserdampfquelle getriebenen, den vorverdichteten Wasserdampf nachverdichtenden Dampfstrahlpumpe zuführt, die den nachverdichteten Wasserdampf an den Wärmetauscher zu dessen Beheizung abgibt.

In einer solchen Blasendestillationsanlage wird ein Teil der zu ihrer Beheizung zugeführten Energie ausschließlich aus der vom Kondensator über den Kühlwasserkreislauf abgeführten Energie rückgewonnen. Der Ausgleich der zur Beheizung der Destillationsblase erforderlichen Energie erfolgt über die Wasserdampfquelle. In den Weg des alkoholhaltigen Dampfs im Oberteil der Destillationsblase bzw. des Kondensators muss nicht eingegriffen werden und dementsprechend wird auch die qualitätsbestimmende Kondensation im Wesentlichen nicht beeinflusst.

Der Massenstrom an Wasserdampf, der dem Wärmetauscher zur Beheizung der Destillationsblase zugeführt wird, ist zweckmäßigerweise im Wesentlichen konstant, um Qualitätsänderungen des Whiskeys zu vermeiden. In einer bevorzugten Ausführungsform ist hierzu eine Steuerung oder Regelung vorgesehen, die die Drehzahl eines Antriebsmotors des mechanischen Verdichters einstellt. Auf diese Weise lässt sich der Saugdruck des mechanischen Verdichters und der Austrittsdruck der nachverdichtenden Dampfstrahlpumpe bei abnehmender Alkoholkonzentration der in der Destillationsblase erwärmten, vergorenen Würze verringern, um im Laufe der Destillation mit einem im Wesentlichen konstanten Dampfmassenstrom heizen zu können.

Der mechanische Verdichter wird bevorzugt drehzahlgeregelt. In diesem Zusammenhang hat es sich als zweckmäßig erwiesen, wenn zugleich die Temperatur des mechanischen Verdichters, insbesondere seines Gehäuses in einem vorbestimmten Temperaturbereich betrieben wird. Ist das Gehäuse zu kalt, kann es zu Korrosionsschäden kommen, während bei Überhitzung der mechanische Verdichter thermisch geschädigt werden kann. Dies gilt insbesondere, wenn es sich bei dem mechanischen Verdichter um ein Drehkolbengebläse handelt, das zweckmäßigerweise in einem Temperaturbereich von 120-150° C betrieben werden sollte. In einer bevorzugten Ausgestaltung wird der Temperaturbereich mittels einer Temperaturregelung durch Einspritzen von Wasser in den Saugstrom des mechanischen Verdichters bzw. des Drehkolbengebläses eingehalten.

Der Energieverbrauch der Destillationsblase lässt sich ohne Qualitätseinbuße des destillierten Whiskeys weitgehend verringern, wenn der mechanische Verdichter den Absolutdruck des vorverdichteten Wasserdampfs bezogen auf den Absolutdruck am Separator um einen Faktor 2 bis 3 erhöht und/oder die Temperatur des vorverdichteten Wasserdampfs auf mehr als 100° C erhöht. Entsprechende Vorteile werden erreicht, wenn die Dampfstrahlpumpe den Absolutdruck des nachverdichteten Wasserdampfs bezogen auf den Absolutdruck des vorverdichteten Wasserdampfs um einen Faktor 1,1 bis 1,4, insbesondere 1,2 bis 1,3 erhöht und/oder die Temperatur des nachverdichteten Wasserdampfs bezogen auf die Temperatur des vorverdichteten Wasserdampfs um einen Faktor 1,05 bis 1,3, insbesondere um einen Faktor 1,1 bis 1,25 erhöht. Die vorstehenden Werte gelten insbesondere, wenn die Drehzahl des mechanischen Verdichters, wie nachfolgend beschrieben bei wenigstens 60.000 1/min liegen.

Bei dem mechanischen Verdichter handelt es sich bevorzugt um ein Drehkolbengebläse oder ein Roots-Gebläse oder einen Turbokompressor. Das Drehkolbengebläse wie auch die Dampfstrahlpumpe bilden "Volumenstromförderer", die in erster Näherung einen konstanten Volumenstrom fördern, und zwar im Wesentlichen unabhängig vom Saugdruck. Das System aus Drehkolbengebläse und Dampfstrahlpumpe lässt sich auf diese Weise zweckmäßig im Sinne eines konstanten Dampfmassenstroms steuern bzw. regeln. Darüber hinaus sind Drehkolbengebläse vergleichsweise preiswert. Bei Nutzung eines Turbokompressors liegt dessen Drehzahl bevorzugt bei mehr als 20.000 1/min, insbesondere bei mehr als 60.000 1/min und vorzugsweise bei wenigstens 90.000 1/min.

Herkömmliche Turbokompressoren, wie sie für die Energierückgewinnung in Destillations- oder Verdampferanlagen eingesetzt werden, sind vergleichsweise teuer. Sie haben zumeist ein aus Blechzuschnitten geschweißtes Gehäuse und auch ihr Verdichterrad ist aus Einzelteilen zusammengeschweißt. Die Kosten können beträchtlich verringert werden, wenn der Turbokompressor ein als Metallgussteil ausgebildetes Gehäuse und ein als Frästeil ausgebildetes Verdichterrad hat, das von einem Elektromotor über ein Getriebe, insbesondere ein Planetengetriebe angetrieben wird. Solche Komponenten lassen sich kostengünstig bereitstellen, soweit deren Abmessungen vergleichsweise klein sind. Derartige Turbokompressoren liefern dennoch einen hinreichend großen Massendurchsatz, wenn sie, wie vorstehend erläutert, mit einer Drehzahl von wenigstens 60.000 1/min, vorzugsweise wenigstens 90.000 1/min arbeiten. Bei Turbokompressoren dieser Art kann auf Verdichtereinheiten zurückgegriffen werden, wie sie in großen Stückzahlen bei vergleichsweise geringen Kosten als "Tubolader" von Brennkraftmaschinen eingesetzt werden.

Die vorstehend erläuterte Idee der Nutzung der Verdichtereinheit eines "Turboladers" einer Brennkraftmaschine als mechanischer Verdichter einer Destillationsanlage lässt sich bei der vorangegangen erläuterten Blasendestillationsanlage von Vorteil einsetzen. In dieser Destillationsanlage kann demnach vorgesehen sein, dass der mechanische Verdichter ein mit einer Drehzahl von 90.000 1/min oder mehr rotierend angetriebenes Verdichterrad aufweist. Der mechanische Verdichter wird von einem, gegebenenfalls auch mehreren Elektromotoren angetrieben, die das Verdichterrad über ein Getriebe, insbesondere ein Umlaufgetriebe, speziell ein Planetenradgetriebe antreiben. Das Planetenradgetriebe hat zumindest drei zueinander koaxiale, relativ zueinander um eine gemeinsame Achse drehbare Getriebelemente: Sonnenrad, Hohlrad und Planetenradträger für mit dem Sonnenrad und dem Hohlrad in Verbindung stehende Planetenräder. Eine Eigenschaft des Planetentriebes ist, dass an zwei dieser Getriebelemente eingespeiste Rotationsleistung bezogen auf die Drehzahl und/oder das Drehmoment
additiv oder subtraktiv auf das dritte Getriebeelement übertragen wird. In einer bevorzugten Ausgestaltung ist deshalb vorgesehen, dass das Verdichterrad mit einem der Getriebeelemente des Planetengetriebes verbunden ist, während eines der beiden anderen Getriebeelemente mit dem Elektromotor verbunden ist, vorzugsweise jedes der beiden anderen Getriebeelemente mit gesonderten Elektromotoren verbunden ist. Bei geeigneter Wahl des mit dem Verdichterrad verbundenen Getriebeelements, beispielsweise des Sonnenrads lassen sich so die Drehzahlen der beiden Elektromotoren additiv einander überlagern. Diese Idee ist insbesondere auch bei der vorangegangen erläuterten Blasendestillationsanlage von Vorteil.

Im Folgenden wird die Erfindung anhand einer Zeichnung näher erläutert. Hierbei zeigt:
- Figur 1: eine Blasendestillationsanlage für Whiskey und
- Figur 2: eine schematische Darstellung eines mechanischen Verdichters, wie er in der Destillationsanlage der Figur 1 eingesetzt werden kann.

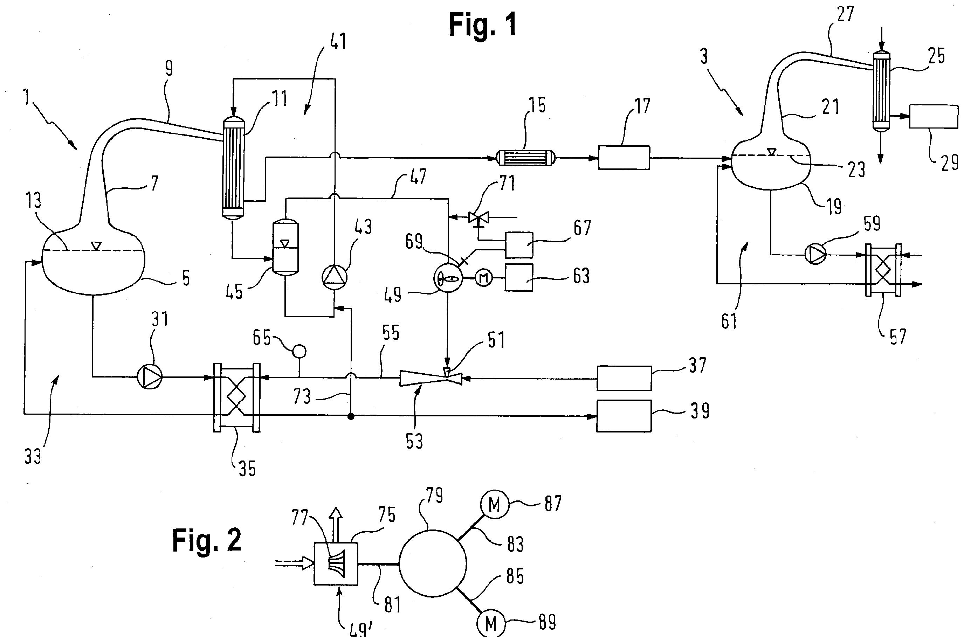

Figur 1 zeigt eine Blasendestillationsanlage für Whiskey mit zwei portionsweise eine alkoholhaltige Flüssigkeit in zwei aufeinanderfolgenden Destillationsgängen destillierenden Destillationsblasen 1, 3. Die dem ersten Destillationsgang zugeordnete Destillationsblase 1 ("wash still") besteht aus Kupfer und hat ein Unterteil 5, welches nach oben durch ein heimartiges, sich verjüngendes Oberteil 7 abgedeckt und über einen Arm 9 ("lyne arm") mit einem Kondensator 11 verbunden ist, welcher bei Erhitzen der in dem Unterteil sich befindenden alkoholhaltigen Flüssigkeit 13 aufsteigende alkoholhaltige Dämpfe kondensiert. Bei der alkoholhaltigen Flüssigkeit 13 handelt es sich um vergorene Würze ("wash"), die in nachfolgend noch erläuterter Weise erhitzt wird und deren Dämpfe an dem Oberteil 7, dem Arm 9 und im vorliegenden Fall an Außenflächen eines gleichfalls aus Kupfer bestehenden Rohrbündels des Kondensators 11 kondensieren. Das Kondensat ("low wines") des ersten Destillationsgangs wird über einen Kühler 15 einem Speicherbehälter 17 zugeführt, aus dem die Destillationsblase 3 für den zweiten Destillationsgang portionsweise befüllt wird. Die zweite Destillationsblase 3 ("spirit still") ähnelt der ersten Destillationsblase 1 und besteht bevorzugt gleichfalls aus Kupfer mit einem Unterteil 19, einem Oberteil 21 und einem aus dem in dem Unterteil 19 erwärmten alkoholhaltigen Kondensat 23 aufsteigende alkoholhaltige Dämpfe einem Kondensator 25 zuführenden Arm 27. Die Destillationsblase 3 liefert drei Fraktionen, von denen der Vorlauf als erste Fraktion und der Nachlauf als dritte Fraktion der nächsten Füllung der Destillationsblase 3 zur erneuten Destillation rückgeführt werden, während die zweite Fraktion als Whiskey-Trinkalkohol einem Speicherbehälter 29 zugeführt wird.

Die vergorene Würze in der ersten Destillationsblase 1 zirkuliert, getrieben von einer Umwälzpumpe 31 in einen Zwangskreislauf 33 durch einen Wärmetauscher 35 dem aus einer Frischdampfquelle 37 in nachfolgend noch näher erläuterter Weise Wasserdampf zur Beheizung der alkoholhaltigen Flüssigkeit der Destillationsblase 1 zugeführt wird. Als Wasser in dem Wärmetauscher 35 anfallendes Kondensat wird bei 39 abgezogen und der Frischdampfquelle 37 zur Nacherhitzung rückgeführt.

Der Kondensator 11 wird durch Kühlwasser gekühlt, welches in einem Zwangskreislauf 41, dessen Umwälzpumpe bei 43 dargestellt ist, durch einen Abscheider 45 geführt, der in dem Kondensator 11 entstehenden Wasserdampf von dem in dem Kreislauf 41 zirkulierenden Kühlwasser trennt und über eine Leitung 47 einem mechanischen Verdichter, insbesondere einem Drehkolbengebläse 49, zuführt. Das Drehkolbengebläse 49 liefert vorverdichteten Wasserdampf an einen Sauganschluss 51 einer als thermischer Verdichter wirkenden Dampfstrahlpumpe 53, die ihrerseits von Frischdampf der Frischdampfquelle 37 betrieben wird und bei 55 nachverdichteten Wasserdampf dem Wärmetauscher 35 zur Beheizung der Destillationsblase 1 zuführt.

Bei dem mechanischen Verdichter kann es sich auch um ein Roots-Gebläse oder einen Turbokompressor handeln. Der Turbokompressor wird zweckmäßigerweise bei einer Drehzahl größer als 20.000 1/min., vorzugsweise aber auch größer als 60.000 1/min., insbesondere wenigstens 90.000 1/min. betrieben. Im vorliegenden Ausführungsbeispiel ist der Wärmetauscher 35 außerhalb der Destillationsblase 1 angeordnet und steht über den Zwangskreislauf 33 mit dieser im Wärmetauschkontakt. Es versteht sich, dass der Wärmetauscher 35 für einen direkten Wärmetauschkontakt auch in der Destillationsblase angeordnet sein kann, womit der Zwangskreislauf 33 entfällt.

Die zweite Destillationsblase 3 wird gleichfalls mit Wasser-Frischdampf über einen Wärmetauscher 57 beheizt, durch den das alkoholhaltige Kondensat 23 von einer Umwälzpumpe 59 getrieben in einem Zwangskreislauf 61 zirkuliert. Auch hier kann unter Wegfall des Zwangskreislaufs 61 der Wärmetauscher 57 in der Destillationsblase 3 angeordnet sein und in direktem Wärmetauschkontakt mit dem Kondensat 23 stehen.

Um gleichbleibende Qualität des Whiskeys zu erreichen, sollte die Destillationsblase 1 mit zumindest annähernd konstantem Dampfmassenstrom am Wärmetauscher 35 beheizt werden. Allerdings ändern sich die Kondensationseigenschaften des Kondensators 11 im Verlauf des Destillationsgangs und damit auch der Druck auf der Saugseite des mechanischen Verdichters, hier des Drehkolbengebläses 49. In einem typischen Destillationsgang steigt der Druck auf der Saugseite des mechanischen Verdichters von beispielsweise -500 mbar,g bei Verdampfung vergorener Würze mit hoher Alkoholkonzentration und niedriger Kondensationstemperatur auf bis zu -300 mbar,g bei Verdampfung vergorener Würze mit nur noch geringem Alkoholgehalt. Gleichzeitig würde aber der erforderliche Austrittsdruck des thermischen Verdichters, d.h. der Dampfstrahlpumpe 53 von 200 mbar,g auf ca. 300 mbar,g zunehmen, wenn nicht anderweitig dafür gesorgt würde, dass der Wärmetauscher 35 mit einem im Wesentlichen konstanten Dampfmassenstrom geheizt werden kann.

Um einen im Wesentlichen konstanten Dampfmassenstrom zu erreichen, wird die Motordrehzahl des Drehkolbengebläses 49 im Verlauf des Destillationsgangs mittels einer Steuerung oder Regelung 63 entsprechend der Abnahme der Alkoholkonzentration der vergorenen Würze abgesenkt. Führungsgröße der Regelung 63 kann der Alkoholgehalt der in der Destillationsblase 1 erwärmten, alkoholhaltigen Flüssigkeit 13 sein; es können aber auch andere Parameter für die Führung der Drehzahlregelung ausgenutzt werden, beispielsweise der Dampfmassendurchsatz am Eingang des Wärmetauschers 35 oder auch die Temperatur und/oder der Druck am Eingang des Wärmetauschers 35, wie dies durch einen Sensor 65 angedeutet ist.

Um einerseits möglichst gleichbleibende Eigenschaften der Energierückgewinnung zu gewährleisten und andererseits temperaturbedingte Schäden des Drehkolbengebläses 49 zu vermeiden, wird mittels eines Temperaturreglers 67 die Gehäusetemperatur des Drehkolbengebläses 49 in einem vorbestimmten Temperaturbereich von beispielsweise 120 bis 150° C konstant gehalten. Der Temperaturregler 67 erfasst mittels eines Temperatursensors 69 die Gehäusetemperatur und steuert über ein Ventil 71 das Einspritzen von Wasser in den Saugstrom des Drehkolbengebläses 49.

Um Wasserverluste in dem Kühlwasser-Zwangskreislauf 41 aufgrund des zur Energierückgewinnung über den Abscheider 45 entnommenen Wasserdampfs auszugleichen, wird über eine gegebenenfalls ventilgesteuerte Leitung 73 von der Wasserkondensatseite des Wärmetauschers 35 Wasser in den Zwangskreislauf 41 rückgeführt.

Das Drehkolbengebläse 49 erhöht den Absolutdruck des vorverdichteten Wasserdampfs am Sauganschluss 51 der Dampfstrahlpumpe 53 bezogen auf den Absolutdruck am Separator 45 um einen Faktor 2 bis 3. Die Temperatur des vorverdichteten Wasserdampfs wird hierbei bevorzugt auf mehr als 100° C erhöht.

Die Dampfstrahlpumpe 53 erhöht den Absolutdruck des nachverdichteten Wasserdampfs am Eingang des Wärmetauschers 35 bezogen auf den Absolutdruck des vorverdichteten Wasserdampfs an ihrem Sauganschluss 51 um einen Faktor 1,1 bis 1,4, vorzugsweise 1,2 bis 1,3. Die Temperatur des nachverdichteten Wasserdampfs wird hierbei bezogen auf die Temperatur des vorverdichteten Wasserdampfs um einen Faktor 1,05 bis 1,3, vorzugsweise um einen Faktor 1,1 bis 1,25 erhöht.

In einem typischen Ausführungsbeispiel herrscht in der ersten Destillationsblase ein Druck von 1 bar a bei einer Temperatur von 92 bis 97° C. Am Kühlwasserausgang des Kondensators 11 liegt der Druck bei 0,5 bis 0,65 bar a bei einer Temperatur zwischen 81 und 88° C. Das Drehkolbengebläse 49 liefert vorverdichteten Wasserdampf beispielsweise mit einem Druck von 1 bar a und einer Temperatur von 102 bis 106° C. Die Dampfstrahlpumpe 53 wird aus der Frischdampfquelle mit Frischdampf von beispielsweise 12 bar betrieben und erhöht den Druck des nachverdichteten Wasserdampfs auf etwa 1,2 bis 1,3 bar a bei einer Temperatur von etwa 120° C.

Bei herkömmlicher Bauart eines als Turbokompressor ausgebildeten mechanischen Verdichters 49 sind die Abmessungen des Turbokompressors vergleichsweise groß. Bei seinem Gehäuse und seinem Verdichterrad handelt es sich um aus Einzelteilen zusammengeschweißte Bauelemente. Dementsprechend ist ein solcher Turbokompressor teuer. Figur 2 zeigt schematisch einen mechanischen Verdichter 49', der auf einer Verdichtereinheit aufbaut, wie sie bei "Turboladern" von Brennkraftmaschinen in großer Stückzahl und kostengünstig erhältlich sind. Ein solcher mechanischer Verdichter hat ein als Metallgussteil ausgebildetes Gehäuse 75 und ein als Frästeil ausgebildetes Verdichterrad 77. Da der Durchmesser des Verdichterrads üblicher "Turbolader" vergleichsweise klein ist, ist vorgesehen, dass das Verdichterrad 77 über ein Getriebe 79 von wenigstens einem Elektromotor angetrieben wird. Im dargestellten Ausführungsbeispiel ist das Getriebe 79 als Umlaufgetriebe, hier in Form eines Planetenradgetriebes ausgebildet, welches in üblicher Weise 3 in Antriebsverbindung miteinander stehende Getriebeelemente 81, 83 und 85 in Form eines Sonnenrads, eines Hohlrads und eines Planetenradträgers für mit dem Sonnenrad und dem Hohlrad in Antriebsverbindung stehende Räder umfasst. Das Sonnenrad, das Hohlrad und er Planetenradträger sind koaxial zueinander relativ zueinander drehbar. Während eines der Getriebeelemente, hier das Getriebeelement 81 mit dem Verdichterrad 77 gekuppelt ist, ist jedes der anderen beiden Getriebeelemente 83, 85 mit je einem gesonderten Elektromotor 87, 89 gekuppelt. Bei dem Getriebeelemente 81 handelt es sich zweckmäßigerweise um das Sonnenrad, so dass sich die Drehzahlen der Getriebeelemente 83, 85 einander additiv überlagern. Auf diese Weise lassen sich die vorangegangen erläuterten, vergleichsweise hohen Drehzahlen des Verdichterrads 77 mit herkömmlichen Elektromotoren realisieren. Es versteht sich, dass einer der beiden Elektromotoren 87 oder 89 entfallen kann, wenn eines der beiden Getriebeelemente 83 bzw. 85 stationär zum Gehäuse 75 gehalten ist. Der mechanische Verdichter aus Figur 2 kann anstelle des Verdichters 49 der Blasendestillationsanlage aus Figur 1 genutzt werden.

## Patentansprüche

1. Blasendestillationsanlage, insbesondere für Whiskey, umfassend
- eine Destillationsblase (1) mit einem für die Erwärmung eines alkoholhaltigen Flüssigkeit (13) eingerichteten Unterteil (5) und einem alkoholhaltige Dämpfe abführenden Oberteil (7),
- eine die alkoholhaltige Flüssigkeit (13) in dem Unterteil (5) erwärmende Heizeinrichtung mit einem in Wärmetauschkontakt mit der alkoholhaltigen Flüssigkeit (13) stehenden, mit Wasserdampf beheizten Wärmetauscher (35), und
- einen aus dem Oberteil (7) zugeführten, alkoholhaltigen Dampf kondensierenden Kondensator (11) mit einem Kühlwasser im Kreislauf über den Kondensator (11) führenden Kühlwasserkreislauf (41),
**dadurch gekennzeichnet, dass**
der Kühlwasserkreislauf (41) einen Wasserdampf aus dem Kühlwasserkreislauf (41) abtrennenden Separator (45) umfasst,
und dass ein mechanischer Verdichter (49; 49') den von dem Separator (45) abgetrennten Wasserdampf vorverdichtet und einem Sauganschluss (51) einer von Wasserdampf aus einer Wasserdampfquelle (37) getriebenen, den vorverdichteten Wasserdampf nachverdichtenden Dampfstrahlpumpe (53) zuführt, die den nachverdichteten Wasserdampf an den Wärmetauscher (35) zu dessen Beheizung abgibt.

2. Blasendestillationsanlage nach Anspruch 1, **dadurch gekennzeichnet, dass** dem mechanischen Verdichter (49; 49') eine Steuerung oder eine Regelung (63) zugeordnet ist, mittels der der Massenstrom an vorverdichteten Wasserdampf einstellbar ist.

3. Blasendestillationsanlage nach Anspruch 2, **dadurch gekennzeichnet, dass** die Steuerung bzw. Regelung (63) die Drehzahl eines Antriebsmotors des mechanischen Verdichters (49; 49') einstellt.

4. Blasendestillationsanlage nach Anspruch 2 oder 3, **dadurch gekennzeichnet, dass** die Regelung den Dampfmassenstrom an nachverdichtetem Wasserdampf im Wesentlichen konstant hält.

5. Blasendestillationsanlage nach einem der Ansprüche 1 bis 4, **dadurch gekennzeichnet, dass** der mechanische Verdichter als Drehkolbengebläse (49) oder als Roots-Gebläse oder als Turbokompressor ausgebildet ist.

6. Blasendestillationsanlage nach Anspruch 5, **dadurch gekennzeichnet, dass** der Turbokompressor (49') ein als Metallgusgehäuseteil ausgebildetes Gehäuse (75) und ein von einem Elektromotor (87, 89) über ein Getriebe (79), insbesondere ein Planetengetriebe angetriebenes, als Frästeil ausgebildetes Verdichterrad (77) aufweist.

7. Blasendestillationsanlage nach einem der Ansprüche 1 bis 6, **dadurch gekennzeichnet, dass** dem mechanischen Verdichter (49) eine die Temperatur des mechanischen Verdichters (49) durch Einspritzen von Wasser auf der Saugseite des mechanischen Verdichters (49) in einem vorbestimmten Temperaturbereich haltende Temperaturreglung (67) zugeordnet ist.

8. Blasendestillationsanlage nach einem der Ansprüche 1 bis 7, **dadurch gekennzeichnet, dass** die alkoholhaltige Flüssigkeit wässrige, vergorene Würze ist.

9. Blasendestillationsanlage nach Anspruch 1,
**dadurch gekennzeichnet, dass**
der mechanische Verdichter (49') ein mit einer Drehzahl von 90.000 1/min oder mehr rotierend angetriebenes Verdichterrad (77) aufweist.

10. Blasendestillationsanlage nach Anspruch 9, **dadurch gekennzeichnet, dass** der mechanische Verdichter (49') von einem Elektromotor (87, 89) angetrieben ist.

11. Blasendestillationsanlage nach Anspruch 10, **dadurch gekennzeichnet, dass** der Elektromotor (87, 89) das Verdichterrad (77) über ein Getriebe (79), insbesondere ein Planetenradgetriebe antreibt.

12. Blasendestillationsanlage nach Anspruch 11, **dadurch gekennzeichnet, dass** das Verdichterrad (77) mit einem (81) der Getriebeelemente (81, 83, 85) - Sonnenrad oder Planetenradträger oder Hohlrad des Planetengetriebes (79) - verbunden ist und dass eines der beiden anderen Getriebeelemente mit dem Elektromotor oder jedes der beiden anderen Getriebeelemente (83, 85) mit gesonderten Elektromotoren (87, 89) verbunden ist.

13. Blasendestillationsanlage nach einem der Ansprüche 9 bis 11, **dadurch gekennzeichnet, dass** der mechanische Verdichter (49') ein Metallgehäuse (75) und ein als Frästeil ausgebildetes Verdichterrad (77), insbesondere Schaufelrad aufweist.

14. Verfahren zum Betreiben einer Blasendestillationsanlage nach Anspruch 5, **dadurch gekennzeichnet, dass** die Drehzahl des Turbokompressors größer als 20.000 1/min, insbesondere größer als 60.000 1/min, vorzugsweise wenigstens 90.000 1/min beträgt.

15. Verfahren nach Anspruch 14 zum Betreiben einer Blasendestillationsanlage nach einem der Ansprüche 1 bis 7, **dadurch gekennzeichnet, dass** der mechanische Verdichter (49) dem Absolutdruck des vorverdichteten Wasserdampfs bezogen auf den Absolutdruck am Separator (45) um einen Faktor 2 bis 3 erhöht und/oder die Temperatur des vorverdichteten Wasserdampfs auf mehr als 100° C erhöht.

16. Verfahren nach einem der Ansprüche 14 oder 15 zum Betreiben einer Blasendestillationsanlage nach einem der Ansprüche 1 bis 7, **dadurch gekennzeichnet, dass** die Dampfstrahlpumpe (53) den Absolutdruck des nachverdichteten Wasserdampfs bezogen auf den Absolutdruck des vorverdichteten Wasserdampfs um einen Faktor 1,1 bis 1,4, insbesondere 1,2 bis 1,3 erhöht und/oder die Temperatur des nachverdichteten Wasserdampfs bezogen auf die Temperatur des nachverdichteten Wasserdampfs um einen Faktor 1,05 bis 1,3, insbesondere um einen Faktor 1,2 bis 1,25 erhöht.

17. Verfahren nach einem der Ansprüche 14 bis 16 zum Betreiben einer Blasendestillationsanlage nach Anspruch 9, **dadurch gekennzeichnet, dass** das Verdichterrad (77) mit einer Drehzahl von 90.000 1/min oder mehr rotierend angetrieben wird.

## Claims

1. Pot still distillation system, in particular for whiskey, comprising
- a distillation pot still (1) having a base (5) set up to heat an alcoholic liquid (13), and a top (7) which removes alcoholic vapours,
- a heating device which heats the alcoholic liquid (13) in the base (5) and has a heat exchanger (35) which is in thermal contact with the alcoholic liquid (13) and is heated by water vapour, and
- a condenser (11) which condenses alcoholic vapour supplied from the top (7) and has a cooling water circuit (41) which circulates cooling water across the condenser (11),
**characterised in that**
the cooling water circuit (41) comprises a separator (45) which removes water vapour from the cooling water circuit (41),
and **in that** a mechanical compressor (49; 49') precompresses the water vapour removed by the separator (45) and supplies said vapour to an intake port (51) of a steam jet pump (53) which is driven by water vapour from a water vapour source (37) and post-compresses the pre-compressed water vapour, said steam jet pump supplying the post-compressed water vapour to the heat exchanger (35) for heating same.

2. Pot still distillation system according to claim 1, **characterised in that** a control system (63) is assigned to the mechanical compressor (49; 49'), by means of which control system the mass flow of pre-compressed water vapour can be adjusted.

3. Pot still distillation system according to claim 2, **characterised in that** the control system (63) adjusts the speed of a drive motor of the mechanical compressor (49; 49').

4. Pot still distillation system according to either claim 2 or claim 3, **characterised in that** the control system keeps the mass vapour flow of post-compressed water vapour substantially constant.

5. Pot still distillation system according to any of claims 1 to 4, **characterised in that** the mechanical compressor is designed as a rotary blower (49) or as a roots blower or as a turbo compressor.

6. Pot still distillation system according to claim 5, **characterised in that** the turbo compressor (49') comprises a housing (75) designed as a cast metal housing part and a compressor wheel (77) designed as a milled part and driven by an electric motor (87, 89) via a gear system (79), in particular a planetary gear system.

7. Pot still distillation system according to any of claims 1 to 6, **characterised in that** a temperature control system (67) is assigned to the mechanical compressor (49), which temperature control system keeps the temperature of the mechanical compressor (49) within a predetermined temperature range by injecting water on the intake side of the mechanical compressor (49).

8. Pot still distillation system according to any of claims 1 to 7, **characterised in that** alcoholic liquid is aqueous fermented wort.

9. Pot still distillation system according to claim 1, **characterised in that** the mechanical compressor (49') comprises a compression wheel (77) which is rotatably driven at a speed of 90,000 1/min or more.

10. Pot still distillation system according to claim 9, **characterised in that** the mechanical compressor (49') is driven by an electric motor (87, 89).

11. Pot still distillation system according to claim 10, **characterised in that** the electric motor (87, 89) drives the compressor wheel (77) by means of a gear system (79), in particular a planetary gear system.

12. Pot still distillation system according to claim 11, **characterised in that** the compressor wheel (77) is connected to one (81) of the gear elements (81, 83, 85), namely the sun gear or planet carrier or ring gear of the planetary gear system (79), and **in that** one of the two other gear elements is connected to the electric motor or each of the two other gear elements (83, 85) is connected to separate electric motors (87, 89).

13. Pot still distillation system according to any of claims 9 to 11, **characterised in that** the mechanical compressor (49') comprises a metal housing (75) and a compressor wheel (77), in particular a paddle wheel, designed as a milled part.

14. Method for operating a pot still distillation system according to claim 5, **characterised in that** the speed of the turbo compressor is greater than 20,000 1/min, in particular greater than 60,000 1/min, preferably at least 90,000 1/min.

15. Method according to claim 14 for operating a pot still distillation system according to any of claims 1 to 7, **characterised in that** the mechanical compressor (49) increases the absolute pressure of the pre-compressed water vapour relative to the absolute pressure at the separator (45) by a factor of 2 to 3 and/or increases the temperature of the pre-compressed water vapour to more than 100 °C.

16. Method according to any of claims 14 and 15 for operating a pot still distillation system according to any of claims 1 to 7, **characterised in that** the steam jet pump (53) increases the absolute pressure of the post-compressed water vapour relative to the absolute pressure of the pre-compressed water vapour by a factor of 1.1 to 1.4, in particular 1.2 to 1.3 and/or increases the temperature of the post-compressed water vapour relative to the temperature of the pre-compressed water vapour by a factor of 1.05 to 1.3, in particular by a factor of 1.2 to 1.25.

17. Method according to any of claims 14 to 16 for operating a pot still distillation system according to any of claims 1 to 7, **characterised in that** the compressor wheel (77) is driven at a speed to 90,000 1/min or more.

## Revendications

1. Installation de distillation utilisant des rebouilleurs, en particulier pour le whisky, comprenant
- un rebouilleur de distillation (1) avec une partie inférieure (5) aménagée pour le chauffage d'un liquide contenant de l'alcool (13) et une partie supérieure (7) évacuant les vapeurs contenant de l'alcool,
- un dispositif de chauffage chauffant le liquide (13) contenant de l'alcool dans la partie inférieure (5), avec un échangeur de chaleur (35) chauffé à la vapeur d'eau et en contact d'échange de chaleur avec le liquide (13) contenant de l'alcool, et
- un condenseur (11) alimenté par la partie supérieure (7) et condensant la vapeur contenant de l'alcool, avec un circuit d'eau de refroidissement (41) passant par le condenseur (11),
**caractérisé en ce que**
le circuit d'eau de refroidissement (41) comprend un séparateur (45) séparant la vapeur d'eau du circuit d'eau de refroidissement (41),
et **en ce qu'**un compresseur mécanique (49 ; 49') précomprime la vapeur d'eau séparée par le séparateur (45) et l'envoie à un raccord d'aspiration (51) d'une pompe à jet de vapeur (53) entraînée par la vapeur d'eau provenant d'une source de vapeur d'eau (37) et recomprimant la vapeur d'eau précomprimée, laquelle pompe à jet de vapeur envoie la vapeur d'eau recomprimée à l'échangeur de chaleur (35) pour le chauffer.

2. Installation de distillation utilisant des rebouilleurs selon la revendication 1, **caractérisée en ce qu'**au compresseur mécanique (49 ; 49') est associée une commande ou une régulation (63) au moyen de laquelle le débit massique de vapeur d'eau précomprimée est réglable.

3. Installation de distillation utilisant des rebouilleurs selon la revendication 2, **caractérisée en ce que** la commande ou la régulation (63) règle la vitesse de rotation d'un moteur d'entraînement du compresseur mécanique (49 ; 49').

4. Installation de distillation utilisant des rebouilleurs selon la revendication 2 ou 3, **caractérisée en ce que** la régulation maintient sensiblement constant le débit massique de vapeur d'eau recomprimée.

5. Installation de distillation utilisant des rebouilleurs selon l'une des revendications 1 à 4, **caractérisée en ce que** le compresseur mécanique est adapté en tant que soufflante à piston rotatif (49) ou soufflante Roots ou en tant que turbocompresseur.

6. Installation de distillation utilisant des rebouilleurs selon la revendication 5, **caractérisée en ce que** le turbocompresseur (49') comporte un boîtier (75) réalisé sous la forme d'une partie de boîtier en métal moulé et une roue de compresseur (77) réalisée sous la forme d'une pièce fraisée et entraînée par un moteur électrique (87, 89) par l'intermédiaire d'un engrenage (79), notamment un engrenage planétaire.

7. Installation de distillation utilisant des rebouilleurs selon l'une des revendications 1 à 6, **caractérisée en ce qu'**au compresseur mécanique (49) est associée une régulation thermique (67) maintenant la température du compresseur mécanique (49) dans une plage de température prédéterminée par injection d'eau sur le côté aspiration du compresseur mécanique (49).

8. Installation de distillation utilisant des rebouilleurs selon l'une des revendications 1 à 7, **caractérisée en ce que** le liquide contenant de l'alcool est du moût fermenté aqueux.

9. Installation de distillation utilisant des rebouilleurs selon la revendication 1, **caractérisée en ce que** le compresseur mécanique (49') comprend une roue de compresseur (77) entraînée en rotation à une vitesse de rotation supérieure ou égale à 90 000 t/min.

10. Installation de distillation utilisant des rebouilleurs selon la revendication 9, **caractérisée en ce que** le compresseur mécanique (49') est entraîné par un moteur électrique (87, 89).

11. Installation de distillation utilisant des rebouilleurs selon la revendication 10, **caractérisée en ce que** le moteur électrique (87, 89) entraîne la roue de compresseur (77) par l'intermédiaire d'un engrenage (79), notamment un engrenage planétaire.

12. Installation de distillation utilisant des rebouilleurs selon la revendication 11, **caractérisée en ce que** la roue de compresseur (77) est reliée à l'un (81) des éléments d'engrenage (81, 83, 85) - roue planétaire ou porte-satellites ou couronne de l'engrenage planétaire (79) - et **en ce que** l'un des deux autres éléments d'engrenage est relié au moteur électrique ou chacun des deux autres éléments d'engrenage (83, 85) est relié à des moteurs électriques (87, 89) distincts.

13. Installation de distillation utilisant des rebouilleurs selon l'une des revendications 9 à 11, **caractérisée en ce que** le compresseur mécanique (49') comporte un boîtier métallique (75) et une roue de compresseur (77), notamment une roue à aubes, réalisée sous forme de pièce fraisée.

14. Procédé pour opérer une installation de distillation utilisant des rebouilleurs selon la revendication 5, **caractérisé en ce que** la vitesse de rotation du turbocompresseur est supérieure à 20 000 t/min, notamment supérieure à 60 000 t/min, de préférence au moins de 90 000 t/min.

15. Procédé selon la revendication 14 pour opérer une installation de distillation utilisant des rebouilleurs selon l'une des revendications 1 à 7, **caractérisé en ce que** le compresseur mécanique (49) augmente la pression absolue de la vapeur d'eau précomprimée par rapport à la pression absolue au niveau du séparateur (45) d'un facteur 2 à 3 et/ou augmente la température de la vapeur d'eau précomprimée à plus de 100°C.

16. Procédé selon l'une des revendications 14 ou 15 pour opérer une installation de distillation utilisant des rebouilleurs selon l'une des revendications 1 à 7, **caractérisé en ce que** la pompe à jet de vapeur (53) augmente la pression absolue de la vapeur d'eau recomprimée par rapport à la pression absolue de la vapeur d'eau précomprimée d'un facteur 1,1 à 1,4, en particulier de 1,2 à 1,3 et/ou augmente la température de la vapeur d'eau recomprimée par rapport à la température de la vapeur d'eau recomprimée d'un facteur de 1,05 à 1,3, en particulier d'un facteur de 1,2 à 1,25.

17. Procédé selon l'une des revendications 14 à 16 pour opérer une installation de distillation utilisant des rebouilleurs selon la revendication 9, **caractérisé en ce que** la roue de compresseur (77) est entraînée en rotation à une vitesse de rotation de 90 000 t/min ou plus.
